# EUROPÄISCHE PATENTSCHRIFT

(11) **EP 3 510 064 B1**
(45) Veröffentlichungstag und Bekanntmachung des Hinweises auf die Patenterteilung: **03.05.2023**
(21) Anmeldenummer: 17758898.5
(22) Anmeldetag: 05.09.2017
(51) Int. Cl.: C08F 212/10, B01J 19/24, C08F 2/01, C08F 2/06, C08F 212/08, C08F 212/12

(54) **VERFAHREN UND SYSTEM ZUR HERSTELLUNG EINES POLYMERS**
METHOD AND SYSTEM FOR PRODUCING A POLYMER
PROCÉDÉ ET SYSTÈME POUR LA PRODUCTION D'UN POLYMÈRE

(30) Priorität: 06.09.2016 EP 16187330
(43) Veröffentlichungstag der Anmeldung: 17.07.2019
(73) Patentinhaber: INEOS Styrolution Group GmbH, 60325 Frankfurt am Main (DE)
(72) Erfinder: FISCHER, Wolfgang, 69190 Walldorf (DE); ITTEMANN, Peter, 67125 Dannstadt-Schauernheim (DE); PATCAS, Florian, 67065 Ludwigshafen (DE); RUF, Michael, 68723 Schwetzingen (DE); MOORS, Rainer, 76726 Germersheim (DE); SCHNABEL, Thorsten, 41540 Dormagen (DE)
(74) Vertreter: Jacobi, Markus Alexander
(86) Internationale Anmeldenummer: PCT/EP2017/072164
(87) Internationale Veröffentlichungsnummer: WO 2018/046467

(56) Entgegenhaltungen:
- US-A- 3 825 512
- US-A- 3 891 603
- US-A- 4 555 384
- US-A- 4 657 994

## Beschreibung

Die Erfindung betrifft ein Verfahren zur Herstellung eines Polymers aus mindestens einer ersten Komponente und einer zweiten Komponente mittels eines Reaktors, wobei in dem Reaktor entstehende Reaktionswärme über einen Siedekühler abgeführt wird, indem in dem Reaktor entstehende gasförmige Brüden dem Siedekühler zugeführt werden, und kondensierte Brüden von dem Siedekühler in den Reaktor zurück geführt werden. Die Erfindung betrifft auch ein System zur Herstellung eines Polymers aus mindestens einer ersten Komponente und einer zweiten Komponente, welches einen Reaktor und einen Siedekühler zur Abführung von in dem Reaktor entstehender Reaktionswärme umfasst.

Es ist bekannt, Polymere, insbesondere Copolymere wie Styrol-Acrylnitril-Copolymer (SAN) oder alpha-Methylstyrol-Acrylnitril-Copolymer (AMSAN) in einem Reaktor, welcher ein Rührwerk aufweist, herzustellen. Ein solcher Reaktor wird in der Literatur auch als "CSTR" (continuous stirred tank reactor) bezeichnet. Dabei werden mindestens zwei Komponenten, insbesondere Monomere, dem Reaktor zugeführt, und innerhalb des Reaktors findet dann eine Polymerisation statt.

Aus EP-B 1297038 ist es bekannt, kautschukhaltige Styrolpolymeren wie AcrylnitrilButadien-Styrol (ABS) oder Acrylnitril-Styrol-Acrylat (ASA) aus einer Kautschukphase und einer Hartphase herzustellen. Als Hartphase eignen sich dabei insbesondere Styrol-Acrylnitril-Copolymer (SAN) sowie alpha-Methylstyrol-Acrylnitril-Copolymer (AMSAN). Die Hartphase wird durch Polymerisation von Monomeren hergestellt.

Aus EP-B 2802619 ist eine thermoplastische Formmasse bekannt, welche unter anderem ein Terpolymer als Komponente beinhaltet. Das Terpolymer enthält dabei Acrylnitril (AN), alpha-Methylstyrol und Styrol (S). Das Terpolymer wird hergestellt, indem die Monomere in einer radikalischen Lösungsmittel-Polymerisation bei Temperaturen von 100°C bis 140°C umgesetzt werden, und anschließend in einem Rohrbündelreaktor bei einem Druck von kleiner als 50 mbar der Restmonomeren-Gehalt auf weniger als 3000 ppm reduziert wird.

Ein Reaktor für Polymerisationen wird beispielsweise in EP-A 0865820 offenbart. Der Reaktor umfasst einen Deckel, einen Boden sowie ein Rührwerk. Der Reaktor umfasst Zuleitungen, über welche die Komponenten dem Reaktor zugeführt werden. In dem Reaktor findet die Polymerisation statt, und das entstandene Polymer wird über Ableitungen aus dem Reaktor entnommen.

US 4,555,384 A offenbart ein Verfahren und ein System zur Herstellung eines Polymers, insbesondere Styrol-Acrylnitril-Copolymer (SAN), aus Monomeren. US 4,657,994 A offenbart ein System zur Herstellung von Ethylen-Vinylacetat-Copolymeren. US 3,891,603 A offenbart ein Verfahren zur Herstellung von Ethylenhaltigen Copo-lymeren mittels eines Reaktors und US 3,825,512 A offenbart ein System zur Herstellung von Vinylchlorid-Copolymer. In einem Reaktor entstehende Reaktionswärme wird jeweils über einen Siedekühler abgeführt.

Die Polymerisation ist in der Regel eine exotherme Reaktion, es entsteht Reaktionswärme. Die entstehende Reaktionswärme wird beispielsweise über einen Siedekühler abgeführt. Als Siedekühler kommt bevorzugt ein Rohrbündelwärmetauscher in Frage. In dem Siedekühler steigen die in dem Reaktor entstehenden gasförmigen Brüden in Rohren auf. Die Rohre werden dabei von einem Kühlmittel umspült. Dadurch kondensieren die Brüden, und die kondensierten Brüden werden in den Reaktor zurückgeführt.

Bei der Herstellung des Polymers bildet sich auch in dem Siedekühler Polymer. Durch das sich bildende Polymer kann es zu Verstopfungen von Rohren des Siedekühlers kommen. Dadurch wird der Durchfluss der Brüden aus dem Reaktor durch den Siedekühler behindert, auch die Abfuhr der Reaktionswärme aus dem Reaktor wird erschwert.

Der Erfindung liegt als eine Aufgabe zugrunde, bei der Herstellung eines Polymers mittels eines Reaktors und eines Siedekühlers die Bildung von Polymer in dem Siedekühler zu verringern oder zu vermeiden.

Diese Aufgabe wird erfindungsgemäß durch ein Verfahren zur Herstellung eines Polymers aus mindestens einer ersten Komponente und einer zweiten Komponente mit den Merkmalen des Anspruchs 1 gelöst.

Gemäß einem gattungsgemäßen Verfahren zur Herstellung eines Polymers aus mindestens einer ersten Komponente und einer zweiten Komponente mittels eines Reaktors wird in dem Reaktor entstehende Reaktionswärme über einen Siedekühler abgeführt, indem in dem Reaktor entstehende gasförmige Brüden dem Siedekühler zugeführt werden, und kondensierte Brüden von dem Siedekühler in den Reaktor zurück geführt werden.

Erfindungsgemäß werden dabei die erste Komponente und/oder die zweite Komponente zumindest teilweise über den Siedekühler zugeführt, und die in den Siedekühler eingefüllte erste Komponente und/oder zweite Komponente gelangen von dem Siedekühler in den Reaktor.

Die Erfindung betrifft insbesondere ein Verfahren zur Herstellung eines (Co)Polymers aus mindestens einer ersten Komponente und einer zweiten Komponente mittels eines Reaktors (50), wobei in dem Reaktor (50) entstehende Reaktionswärme über einen Siedekühler (40) abgeführt wird,
indem in dem Reaktor (50) entstehende gasförmige Brüden dem Siedekühler (40) zugeführt werden, und kondensierte Brüden von dem Siedekühler (40) in den Reaktor (50) zurück geführt werden, wobei die erste Komponente und/oder die zweite Komponente zumindest teilweise über den Siedekühler (40) zugeführt werden und von dem Siedekühler (40) in den Reaktor (50) gelangen und wobei die erste Komponente und/oder die zweite Komponente zumindest teilweise in flüssiger Form dem Siedekühler (40) zugeführt werden, und die erste Komponente und/oder die zweite Komponente zumindest teilweise mit einem Lösemittel gemischt werden, wobei das Lösemittel einer stromabwärts des Reaktors (50) angeordneten Kondensationseinheit (71) über einen Sammelbehälter (80) entnommen wird, wobei die gasförmigen Brüden entgegen der Schwerkraft in vertikal verlaufende Rohre (44) des Siedekühlers (40) aufsteigen und in dem Siedekühler (40) kondensieren, und wobei die kondensierten Brüden anschließend mit der ersten Komponente und/oder der zweiten Komponente mit der Schwerkraft in den Reaktor (50) zurück fließen.

Oftmals enthält die erste Komponente Styrol (bzw. besteht daraus), und die zweite Komponente enthält Acrylnitril (bzw. besteht daraus).

Es wurde gefunden, dass die Standzeit des Siedekühlers deutlich verlängert werden kann, wenn die erste Komponente und/oder zweite Komponente zumindest teilweise in den Siedekühler eingefüllt werden und von dem Siedekühler in den Reaktor gelangen. Bei aus dem Stand der Technik bekannten Verfahren werden die Komponenten direkt in den Reaktor eingefüllt. Die Standzeit ist dabei die Zeit, während welcher mittels des Reaktors und des Siedekühlers Polymer produziert wird. Die Standzeit endet vorliegend, wenn sich in dem Siedekühler so viel Polymer gebildet hat, dass der Durchfluss der Brüden aus dem Reaktor durch den Siedekühler behindert ist und das gebildete Polymer deshalb aus dem Siedekühler entfernt werden muss.

Die erste Komponente sowie die zweite Komponente, aus welchen das (Co)Polymer hergestellt wird, enthalten insbesondere Monomere. Solche Monomere sind beispielsweise Styrol, und/oder alpha-Methylstyrol einerseits und Acrylnitril und/oder Methacrylsäureester andererseits.

Das erfindungsgemäße Verfahren kann vorteilhaft zur Herstellung von Styrol-Acrylnitril-Copolymer (SAN) verwendet werden. Dabei enthält die erste Komponente Styrol (bzw. besteht daraus), und die zweite Komponente enthält Acrylnitril (bzw. besteht daraus). Bevorzugte Mischungsverhältnisse (w/w) sind dabei 90 Anteile Styrol zu 10 Anteilen Acrylnitril bis 60 Anteile Styrol zu 40 Anteilen Acrylnitril.

Das erfindungsgemäße Verfahren kann auch vorteilhaft zur Herstellung von Alpha-Methylstyrol-Acrylnitril-Copolymer (AMSAN) verwendet werden. Dabei enthält die zweite Komponente Acrylnitril, und die erste Komponente enthält Alpha-Methylstyrol. Bevorzugte Mischungsverhältnisse sind dabei 80 Anteile Alpha-Methylstyrol zu 20 Anteilen Acrylnitril bis 60 Anteile Alpha-Methylstyrol zu 40 Anteilen Acrylnitril.

Das erfindungsgemäße Verfahren kann auch vorteilhaft zur Herstellung von Styrol-Methylmethacrylat-Copolymer (SMMA) verwendet werden. Dabei enthält die erste Komponente Styrol, und die zweite Komponente enthält Methylmethacrylat (MMA).

Es ist auch denkbar, mehr als zwei Komponenten, beziehungsweise mehr als zwei Monomere zu verwenden. Insbesondere können Terpolymere aus drei Monomeren mittels des erfindungsgemäßen Verfahrens hergestellt werden. Beispielsweise kann ein Terpolymer aus den Monomeren Acrylnitril, Styrol und Alpha-Methylstyrol mittels des erfindungsgemäßen Verfahrens hergestellt werden.

Gemäß einer bevorzugten Ausgestaltung der Erfindung werden die erste Komponente und/oder die zweite Komponente zumindest teilweise von oben durch eine Haube des Siedekühlers in den Siedekühler eingefüllt. Die Haube des Siedekühlers ist dabei in einem oberen Bereich angeordnet und schließt den Siedekühler nach oben ab. Die erste Komponente und/oder die zweite Komponente werden somit mit der Schwerkraft in den Siedekühler eingebracht und fallen aufgrund der Schwerkraft in den Siedekühler hinein.

Gemäß einer besonders bevorzugten Ausgestaltung der Erfindung werden die erste Komponente und/oder die zweite Komponente zumindest teilweise von oben in mehrere vertikal verlaufende Rohre des Siedekühlers gefüllt. In diesen Rohren kondensieren die aus dem Reaktor aufsteigenden Brüden. Die erste Komponente und/oder die zweite Komponente werden also derart in den Siedekühler eingefüllt, dass die erste Komponente und/oder die zweite Komponente in die besagten Rohre fallen.

Die bei der in dem Reaktor stattfindenden Polymerisation entstehenden gasförmigen Brüden steigen entgegen der Schwerkraft in den vertikal verlaufenden Rohren des Siedekühlers auf und kondensieren in dem Siedekühler. Die kondensierten Brüden fließen anschließend mit der ersten Komponente und/oder der zweiten Komponente mit der Schwerkraft in den Reaktor zurück.

Die erste Komponente und/oder die zweite Komponente werden zumindest teilweise in flüssiger Form dem Siedekühler zugeführt. Die erste Komponente und/oder die zweite Komponente fließen somit in den Siedekühler hinein.

Die erste Komponente und/oder die zweite Komponente werden dabei zumindest teilweise mit einem Lösemittel gemischt. Als Lösemittel kommen beispielsweis Ethylbenzol (EB) und Toluol zum Einsatz. Ein weiteres geeignetes Lösemittel ist Methylethylketon.

Das Lösemittel wird dabei einer stromabwärts des Reaktors angeordneten Kondensationseinheit über einen Sammelbehälter entnommen. Auch nicht umgesetzte Monomere der ersten Komponente und der zweiten Komponente werden der Kondensationseinheit, vorzugsweise über den Sammelbehälter, entnommen.

Das Lösemittel wird nach Kondensation zusammen mit den kondensierten, nicht umgesetzten Monomeren der ersten Komponente und/oder der zweiten Komponente in den Reaktor zurückgeführt. Das Lösemittel befindet sich somit ständig in einem Umlauf.

Gemäß einer vorteilhaften Weiterbildung der Erfindung werden die erste Komponente und/oder die zweite Komponente teilweise direkt in den Reaktor eingefüllt.

Die Aufgabe wird erfindungsgemäß auch durch ein System zur Herstellung eines Polymers aus mindestens einer ersten Komponente und einer zweiten Komponente mit den Merkmalen des Anspruchs 8 gelöst.

Ein gattungsgemäßes System zur Herstellung eines Polymers aus mindestens einer ersten Komponente und einer zweiten Komponente umfasst einen Reaktor, in welchem die Polymerisation stattfindet, und einen Siedekühler zur Abführung von in dem Reaktor entstehender Reaktionswärme. Der Reaktor ist derart mit dem Siedekühler verbunden, dass in dem Reaktor entstehende Reaktionswärme über den Siedekühler abgeführt wird, indem in dem Reaktor entstehende gasförmige Brüden dem Siedekühler zugeführt werden, und kondensierte Brüden von dem Siedekühler in den Reaktor zurück geführt werden.

Erfindungsgemäß weist der Siedekühler mindestens eine Einfüll-Öffnung zum Einfüllen der ersten Komponente und/oder der zweiten Komponente auf. Die in den Siedekühler eingefüllte erste Komponente und/oder zweite Komponente gelangen somit von dem Siedekühler in den Reaktor.

Es wurde herausgefunden, dass die Standzeit des Siedekühlers deutlich verlängert werden kann, wenn die erste Komponente und/oder zweite Komponente zumindest teilweise durch die Einfüll-Öffnung in den Siedekühler eingefüllt werden und von dem Siedekühler in den Reaktor gelangen. Bei aus dem Stand der Technik bekannten Verfahren werden die Komponenten direkt in den Reaktor eingefüllt.

Bevorzugt ist die mindestens eine Einfüllöffnung in einer Haube des Siedekühlers angeordnet. Die Haube des Siedekühlers ist dabei in einem oberen Bereich angeordnet und schließt den Siedekühler nach oben ab. Somit können die erste Komponente und/oder die zweite Komponente von oben durch die Haube des Siedekühlers in den Siedekühler eingefüllt werden und fallen aufgrund der Schwerkraft in den Siedekühler hinein.

Gemäß einer vorteilhaften Ausgestaltung der Erfindung sind in der Haube des Siedekühlers Düsen angebracht. Die Düsen sind dabei derart angeordnet, dass die durch die mindestens eine Einfüllöffnung eingefüllte erste Komponente und/oder zweite Komponente von oben in vertikal verlaufende Rohre des Siedekühlers fallen und vorzugsweise über alle Rohre verteilt werden. In diesen Rohren kondensieren die aus dem Reaktor aufsteigenden Brüden.

Eine Rückführleitung ist zur Zuführung eines Lösemittels von einer stromabwärts des Reaktors angeordneten Kondensationseinheit zu dem Siedekühler vorgesehen.

Das Gemisch aus Lösemittel und kondensierten, nicht umgesetzten Monomeren, fließt zusammen mit der ersten Komponente und/oder zweiten Komponente in den Siedekühler. Von dort fließt das Lösemittel zusammen mit der gelösten ersten Komponente und/oder zweiten Komponente in den Reaktor und weiter in die stromabwärts des Reaktors angeordnete Entgasungseinheit. Das Lösemittel befindet sich somit ständig in einem Umlauf.

Der Reaktor und der Siedekühler sind derart angeordnet, dass in dem Reaktor entstehende gasförmige Brüden entgegen der Schwerkraft in den Siedekühler aufsteigen, dort kondensieren, und in dem Siedekühler kondensierte Brüden mit der ersten Komponente und/oder der zweiten Komponente mit der Schwerkraft in den Reaktor fließen.

Mittels des erfindungsgemäßen Verfahrens sowie mittels des erfindungsgemäßen Systems sind insbesondere Styrol-Acrylnitril-Copolymer (SAN), Alpha-Methylstyrol-Acrylnitril-Copolymer (AMSAN) oder Styrol-Methylmethacrylat-Copolymer (SMMA), aber auch andere Polymere bzw. Copolymere vorteilhaft herstellbar.

Ausführungsformen der Erfindung werden anhand der folgenden Zeichnung, der nachfolgenden Beschreibung und der Ansprüche näher erläutert.

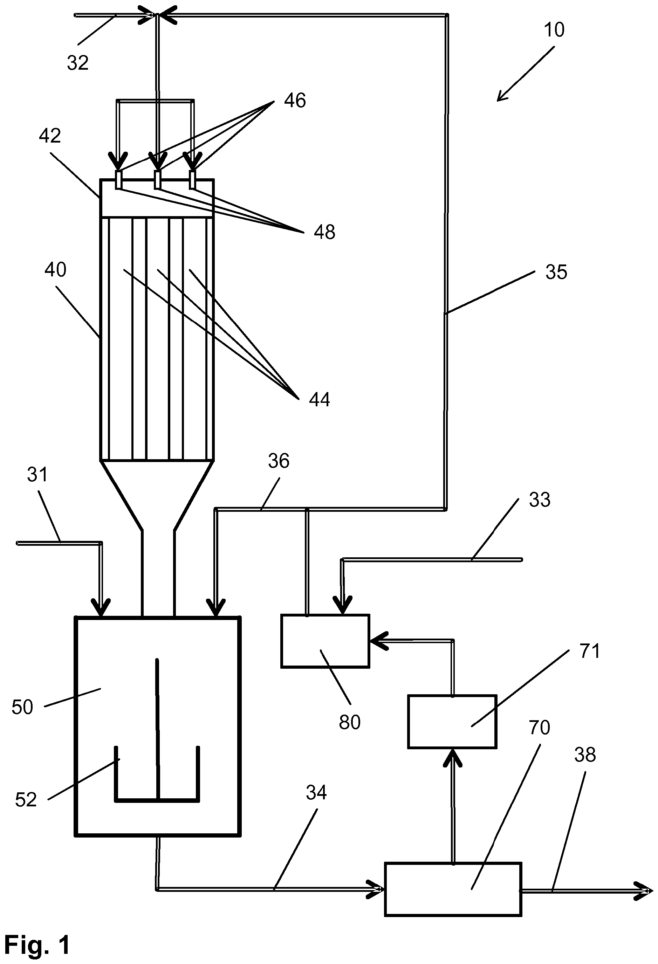

Figur 1 zeigt eine schematische Schnittdarstellung eines Systems zur Herstellung eines Polymers, wie z.B. SAN.

In Figur 1 ist eine schematische Schnittdarstellung eines Systems 10 zur Herstellung eines Polymers aus mindestens einer ersten Komponente und einer zweiten Komponente dargestellt. Das System 10 dient insbesondere, aber nicht ausschließlich, zur Herstellung von Styrol-Acrylnitril-Copolymer (SAN), Alpha-Methylstyrol-Acrylnitril-Copolymer (AMSAN) sowie Styrol-Methylmethacrylat-Copolymer (SMMA).

Das System 10 umfasst einen Reaktor 50. Im Reaktor 50 findet eine Polymerisation von zugeführten Monomeren statt. Innerhalb des Reaktors 50 ist ein Rührer 52 angeordnet. Der Rührer 52 ist mittels eines - hier nicht dargestellten - Elektromotors rotatorisch antreibbar. Es sind auch andere Arten von Reaktoren 50 einsetzbar, in welchen eine Polymerisation von zugeführten Monomeren stattfinden kann.

An den Reaktor 50 ist eine erste Zuführleitung 31 angeschlossen. Die erste Zuführleitung 31 dient der Zuführung von Komponenten direkt in den Reaktor 50. Die zugeführten Komponenten enthalten insbesondere Monomere. Ferner ist an den Reaktor 50 eine erste Rückführleitung 36 angeschlossen. Die erste Rückführleitung 36 dient zur Zuführung eines Lösemittels sowie von bei der Entgasung abgetrennter, nicht umgesetzter Monomere. Das Lösemittel stammt dabei aus einer Kondensationseinheit 71, auf welche an späterer Stelle noch eingegangen wird.

Weiter ist eine Ausgangsleitung 34 an den Reaktor 50 angeschlossen. Mittels der Ausgangsleitung 34 kann in dem Reaktor 50 entstandene Polymermasse abgelassen werden. Stromabwärts des Reaktors 50 ist eine Entgasungseinheit 70 angeordnet und mit der Ausgangsleitung 34 verbunden. Aus dem Reaktor 50 über die Ausgangsleitung 34 abgelassene Polymermasse gelangt somit in die stromabwärts angeordnete Entgasungseinheit 70.

Die Entgasungseinheit 70 dient insbesondere zur Entfernung von flüchtigen Bestandteilen aus der Polymermasse, insbesondere Lösemittel und nicht umgesetzte Monomere. An die Entgasungseinheit 70 ist eine Entnahmeleitung 38 angeschlossen. Über die Entnahmeleitung 38 kann das hergestellte Polymer, welches nunmehr zumindest weitgehend frei von nicht umgesetzten Monomeren und Lösemittel ist, dem System 10 entnommen werden.

Die Entgasungseinheit 70 ist auch mit einer Kondensationseinheit 71 verbunden. Der Kondensationseinheit 71 werden Lösemittel und nicht umgesetzte Monomere, welche in der Entgasungseinheit 70 aus der Polymermasse entfernt wurden, zugeführt. In der Kondensationseinheit 71 kondensieren das Lösemittel und die nicht umgesetzten Monomere.

Die Kondensationseinheit 71 ist mit einem Sammelbehälter 80 verbunden. Dem Sammelbehälter 80 werden das kondensierte Lösemittel und die kondensierten nicht umgesetzte Monomere, aus der Kondensationseinheit 71 zugeführt. An den Sammelbehälter 80 ist ferner eine Einfüllleitung 33 angeschlossen, welche zum Einfüllen oder Nachfüllen von Lösemittel dient.

Die erste Rückführleitung 36, die an den Reaktor 50 angeschlossen ist, und welche zur Zuführung des Lösemittels und der nicht umgesetzten Monomere zu dem Reaktor 50 dient, ist auch mit dem Sammelbehälter 80 verbunden. Über die erste Rückführleitung 36 kann somit das in dem Sammelbehälter 80 vorhandene Lösemittel sowie die nicht umgesetzten Monomere ganz oder teilweise in den Reaktor 50 zurückgeführt werden.

Das System 10 umfasst ferner einen Siedekühler 40. Der Siedekühler 40 dient zur Abführung von Reaktionswärme, die bei der Polymerisation in dem Reaktor 50 entsteht. Der Siedekühler 40 ist vorliegend als Rohrbündelwärmetauscher ausgestaltet und umfasst mehrere vertikal verlaufende Rohre 44. Der Siedekühler 40 ist oben, also an einer dem Erdboden abgewandten Seite, mit einer Haube 42 verschlossen. Ferner umfasst der Siedekühler 40 einen hier nicht dargestellten Kühlmittelzulauf und einen hier ebenfalls nicht dargestellten Kühlmittelablauf.

Der Reaktor 50 ist derart mit dem Siedekühler 40 verbunden, dass die in dem Reaktor 50 bei der Polymerisation entstehende Reaktionswärme über den Siedekühler 40 abgeführt werden kann. Dabei werden in dem Reaktor 50 entstehende gasförmige Brüden dem Siedekühler 40 zugeführt, und kondensierte Brüden von dem Siedekühler 40 fließen in den Reaktor 50 zurück.

Innerhalb des Siedekühlers 40 steigen die in dem Reaktor 50 entstehenden gasförmigen Brüden in den vertikal verlaufenden Rohren 44 auf. Die Rohre 44 werden dabei von einem Kühlmittel umspült. Das Kühlmittel wird dem Siedekühler 40 durch den Kühlmittelzulauf zugeführt, umspült die vertikal verlaufenden Rohre 44 und tritt durch den Kühlmittelablauf wieder aus dem Siedekühler 40 aus. Dabei kühlt das Kühlmittel die Rohre 44 sowie darin vorhandene Brüden aus dem Reaktor 50. Dadurch kondensieren die Brüden, und die kondensierten Brüden fließen in den Reaktor 50 zurück.

In der Haube 42 des Siedekühlers 40 sind eine oder mehrere Einfüllöffnungen 46 angeordnet. Die Einfüllöffnungen 46 in der Haube 42 des Siedekühlers 40 dienen zum Einfüllen von Komponenten in den Siedekühler 40. In der Haube 42 des Siedekühlers 40 können ferner mehrere Düsen 48 vorgesehen sein. Die Düsen 48 sind dabei mit den Einfüllöffnungen 46 verbunden. Komponenten, die durch die Einfüllöffnungen 46 in der Haube 42 des Siedekühlers 40 eingefüllt werden, gelangen somit zu den Düsen 48 in der Haube 42 des Siedekühlers 40.

Die Düsen 48 sind derart in der Haube 42 des Siedekühlers 40 angeordnet, dass Komponenten, die durch die Einfüllöffnungen 46 in den Siedekühler 40 eingefüllt werden, von oben auf alle vertikal verlaufenden Rohre 44 des Siedekühlers 40 verteilt werden. Die durch die Einfüllöffnungen 46 in den Siedekühler 40 eingefüllten Komponenten fallen also mit der Schwerkraft in die vertikal verlaufenden Rohre 44 des Siedekühlers 40, in welchen die Brüden aus dem Reaktor 50 kondensieren.

An die Haube 42 des Siedekühlers 40 ist eine zweite Zuführleitung 32 angeschlossen. Die zweite Zuführleitung 32 dient der Zuführung von Komponenten in den Siedekühler 40. Die zugeführten Komponenten enthalten insbesondere Monomere. Die zweite Zuführleitung 32 ist dabei mit den Einfüllöffnungen 46 in der Haube 42 des Siedekühlers 40 verbunden. Über die zweite Zuführleitung 32 zugeführte Komponenten gelangen somit über die Einfüllöffnungen 46 zu den Düsen 48 in der Haube 42 des Siedekühlers 40 und von dort in die vertikal verlaufenden Rohre 44.

In die zweite Zuführleitung 32 mündet eine zweite Rückführleitung 35. Die zweite Rückführleitung 35 ist, wie auch die erste Rückführleitung 36, mit dem Sammelbehälter 80 verbunden. Über die zweite Rückführleitung 35 kann somit das in dem Sammelbehälter 80 vorhandene Lösemittel sowie die nicht umgesetzten Monomere ganz oder teilweise in die zweite Zuführleitung 32 geleitet werden. Die zweite Rückführleitung 35 dient somit zur Zuführung eines Lösemittels sowie der nicht umgesetzten Monomere zu dem Siedekühler 40.

In dem Reaktor 50 findet unter Rühren mit dem Rührer 52 eine Polymerisation der Monomere statt. Bei der Polymerisation entsteht Reaktionswärme. Die Reaktionswärme bewirkt, dass gasförmige Brüden aus dem Reaktor 50 in den Siedekühler 40 aufsteigen.

Die in dem Reaktor 50 entstehenden gasförmigen Brüden steigen dabei in den vertikal verlaufenden Rohren 44 des Siedekühlers 40 auf und werden dort abgekühlt. Dadurch kondensieren die Brüden, und die kondensierten Brüden fließen in den Reaktor 50 zurück.

Die bei der Polymerisation entstehende Polymermasse enthält einen Feststoffgehalt von etwa 50% - 80%, bevorzugt 60% - 70%. Die Polymermasse wird dann über die Ausgangsleitung 34 der Entgasungseinheit 70 zugeleitet. In der Entgasungseinheit 70 werden die flüchtigen Bestandteile, insbesondere Lösemittel und nicht umgesetzte Monomere, aus der Polymermasse entfernt. Über die Entnahmeleitung 38 wird das hergestellte Polymer, welches nunmehr zumindest weitgehend frei von flüchtigen Bestandteilen ist, dem System 10 entnommen. Das aus der Polymermasse entfernte Lösemittel sowie die nicht umgesetzten Monomere werden durch die Kondensationseinheit 71 und den Sammelbehälter 80 geführt und über die erste Rückführleitung 36 ganz oder teilweise wieder in den Reaktor 50 zurück geleitet oder über die zweite Rückführleitung 35 ganz oder teilweise wieder in den Siedekühler 40 zurück geleitet.

Die Komponenten liegen in flüssiger Form vor. Die Komponenten werden über die Einfüllöffnungen 46 in die Haube 42 des Siedekühlers 40 in den Siedekühler 40 zugegeben. Über die Düsen 48 in der Haube 42 des Siedekühlers 40 werden die Komponenten in die vertikal verlaufenden Rohre 44 des Siedekühlers 40 verteilt. Dabei fallen die Komponenten von oben mit der Schwerkraft in die vertikal verlaufenden Rohre 44 des Siedekühlers 40.

Bedingt durch die Reaktionswärme, die durch die Polymerisation in dem Reaktor 50 entsteht, steigen weiterhin gasförmige Brüden entgegen der Schwerkraft aus dem Reaktor 50 in die vertikal verlaufenden Rohre 44 des Siedekühlers 40 auf. Dort werden die Brüden abgekühlt und kondensieren. Dabei findet eine Vermischung der kondensierten Brüden mit den Komponenten statt, die von oben mit der Schwerkraft in die vertikal verlaufenden Rohre 44 des Siedekühlers 40 eingefüllt werden. Die kondensierten Brüden fließen anschließend mit den in den Siedekühler 40 eingefüllten Komponenten mit der Schwerkraft in den Reaktor 50 zurück. Auch das Lösemittel fließt aus dem Siedekühler 40 in den Reaktor 50.

Das hier beschriebene Verfahren zur Herstellung eines Polymers basiert auf einem kontinuierlichen Prozess.

Die Komponenten werden kontinuierlich ganz oder zumindest teilweise über die zweite Zuführleitung 32 in den Siedekühler 40 zugegeben, beziehungsweise höchstens teilweise über die erste Zuführleitung 31 in den Reaktor 50 zugegeben.

Das hergestellte Polymer wird ebenso kontinuierlich über die Entnahmeleitung 38 entnommen. Das Lösemittel befindet sich dabei in einem Umlauf in dem System 10. Das Lösemittel wird aus der Kondensationseinheit 71 über die erste Rückführleitung 36 dem Reaktor 50 oder über die zweite Rückführleitung 35 dem Siedekühler 40 zugeführt.

Die Erfindung wird durch die Beispiele und Ansprüche weiter erläutert.

Bei einem aus dem Stand der Technik bekannten Verfahren zur Herstellung eines Polymers werden die Komponenten (Styrol und Acrylnitril) ausschließlich direkt in den Reaktor 50 eingefüllt. Das hergestellte Polymer wird kontinuierlich entnommen.

Nach mehreren Monaten bis zu zwei Jahren hat sich in dem Siedekühler so viel Polymer (SAN) gebildet, dass die Kühlleistung signifikant reduziert ist, und dass eine einwandfreie Temperaturführung nicht mehr gewährleistet ist. Es ergibt sich häufig eine Standzeit zwischen ein und zwei Jahren.

In einem Versuch zur Herstellung eines Polymers (SAN) mittels des erfindungsgemäßen Verfahrens in einem erfindungsgemäßen System 10 werden die Komponenten ganz oder teilweise in den Siedekühler 40 eingefüllt. Das hergestellte Polymer wird kontinuierlich entnommen. Es dauerte vorliegend etwa fünf Jahre bis sich in dem Siedekühler so viel Polymer gebildet hatte, dass der Durchfluss der Brüden aus dem Reaktor 50 durch den Siedekühler 40 signifikant behindert wurde. Es ergab sich also eine Standzeit von fünf Jahren.

### Bezugszeichenliste

- 10: System
- 31: erste Zuführleitung
- 32: zweite Zuführleitung
- 33: Einfüllleitung
- 34: Ausgangsleitung
- 35: zweite Rückführleitung
- 36: erste Rückführleitung
- 38: Entnahmeleitung
- 40: Siedekühler
- 42: Haube
- 44: Rohr
- 46: Einfüllöffnung
- 48: Düse
- 50: Reaktor
- 52: Rührer
- 70: Entgasungseinheit
- 71: Kondensationseinheit
- 80: Sammelbehälter

## Patentansprüche

1. Verfahren zur Herstellung eines Polymers aus mindestens einer ersten Komponente und einer zweiten Komponente mittels eines Reaktors (50), wobei in dem Reaktor (50) entstehende Reaktionswärme über einen Siedekühler (40) abgeführt wird, indem in dem Reaktor (50) entstehende gasförmige Brüden dem Siedekühler (40) zugeführt werden, und kondensierte Brüden von dem Siedekühler (40) in den Reaktor (50) zurück geführt werden, **dadurch gekennzeichnet, dass** die erste Komponente und/oder die zweite Komponente zumindest teilweise über den Siedekühler (40) zugeführt werden und
von dem Siedekühler (40) in den Reaktor (50) gelangen, und dass die erste Komponente und/oder die zweite Komponente zumindest teilweise in flüssiger Form dem Siedekühler (40) zugeführt werden, und dass die erste Komponente und/oder die zweite Komponente zumindest teilweise mit einem Lösemittel gemischt werden, wobei das Lösemittel einer stromabwärts des Reaktors (50) angeordneten Kondensationseinheit (71) über einen Sammelbehälter (80) entnommen wird, wobei
die gasförmigen Brüden entgegen der Schwerkraft in vertikal verlaufende Rohre (44) des Siedekühlers (40) aufsteigen und in dem Siedekühler (40) kondensieren, und wobei
die kondensierten Brüden anschließend mit der ersten Komponente und/oder der zweiten Komponente mit der Schwerkraft in den Reaktor (50) zurück fließen.

2. Verfahren nach Anspruch 1, **dadurch gekennzeichnet, dass** die erste Komponente Styrol enthält, und dass die zweite Komponente Acrylnitril enthält.

3. Verfahren nach einem der vorstehenden Ansprüche, **dadurch gekennzeichnet, dass** die zweite Komponente Acrylnitril enthält, und dass die erste Komponente alpha-Methylstyrol enthält.

4. Verfahren nach einem der vorstehenden Ansprüche, **dadurch gekennzeichnet, dass** die erste Komponente Styrol enthält, und dass die zweite Komponente Methylmethacrylat enthält.

5. Verfahren nach einem der vorstehenden Ansprüche, **dadurch gekennzeichnet, dass** die erste Komponente und/oder die zweite Komponente zumindest teilweise von oben durch eine Haube (42) des Siedekühlers (40) eingefüllt werden.

6. Verfahren nach einem der vorstehenden Ansprüche, **dadurch gekennzeichnet, dass** die erste Komponente und/oder die zweite Komponente zumindest teilweise von oben in mehrere vertikal verlaufende Rohre (44) des Siedekühlers (40) gefüllt werden.

7. Verfahren nach einem der vorstehenden Ansprüche, **dadurch gekennzeichnet, dass** die erste Komponente und/oder die zweite Komponente teilweise direkt in den Reaktor (50) eingefüllt werden.

8. System zur Herstellung eines Polymers aus mindestens einer ersten Komponente und einer zweiten Komponente, umfassend einen Reaktor (50) und einen Siedekühler (40) zur Abführung von in dem Reaktor (50) entstehender Reaktionswärme, **dadurch gekennzeichnet, dass** der Siedekühler (40) mindestens eine Einfüllöffnung (46) zum Einfüllen der ersten Komponente und/oder der zweiten Komponente aufweist, und dass
eine Rückführleitung (35) zur Zuführung eines Lösemittels von einer stromabwärts des Reaktors (50) angeordneten Kondensationseinheit (71) zu dem Siedekühler (40) vorgesehen ist, und dass
die Rückführleitung (35) mit einem Sammelbehälter (80) verbunden ist, und dass die Kondensationseinheit (71) mit dem Sammelbehälter (80) verbunden ist, und dass
der Reaktor (50) und der Siedekühler (40) derart angeordnet sind, dass in dem Reaktor (50) entstehende Brüden entgegen der Schwerkraft in den Siedekühler (40) aufsteigen, und dass in dem Siedekühler (40) kondensierte Brüden mit der ersten Komponente und/oder der zweiten Komponente mit der Schwerkraft in den Reaktor (50) fließen.

9. System nach Anspruch 8, **dadurch gekennzeichnet, dass** die mindestens eine Einfüllöffnung (46) in einer Haube (42) des Siedekühlers (40) angeordnet ist.

10. System nach Anspruch 9, **dadurch gekennzeichnet, dass** in der Haube (42) Düsen (48) derart angeordnet sind, dass die durch die mindestens eine Einfüllöffnung (46) eingefüllte erste Komponente und/oder zweite Komponente von oben in vertikal verlaufende Rohre (44) des Siedekühlers (40) verteilt werden.

## Claims

1. Process for producing a polymer from at least one first component and a second component by means of a reactor (50), where
heat of reaction arising in the reactor (50) is removed by means of an evaporative cooler (40), by feeding gaseous vapor formed in the reactor (50) to the evaporative cooler (40) and recirculating condensed vapor from the evaporative cooler (40) to the reactor (50), **characterized in that** the first component and/or the second component are at least partly introduced via the evaporative cooler (40) and go from the evaporative cooler (40) into the reactor (50), and **in that** the first component and/or the second component are introduced at least partly in liquid form into the evaporative cooler (40), and **in that**
the first component and/or the second component are at least partly mixed with a solvent, with the solvent being taken from a condensation unit (71) arranged downstream of the reactor (50) via a collection vessel (80), with
the gaseous vapor ascending against the force of gravity in vertical tubes (44) of the evaporative cooler (40) and condensing in the evaporative cooler (40), and with
the condensed vapor subsequently flowing together with the first component and/or the second component under the force of gravity back into the reactor (50) .

2. Process according to Claim 1, **characterized in that** the first component contains styrene and **in that** the second component contains acrylonitrile.

3. Process according to either of the preceding claims, **characterized in that** the second component contains acrylonitrile and **in that** the first component contains alpha-methylstyrene.

4. Process according to any of the preceding claims, **characterized in that** the first component contains styrene and **in that** the second component contains methyl methacrylate.

5. Process according to any of the preceding claims, **characterized in that** the first component and/or the second component are introduced at least partly from above through a cap (42) of the evaporative cooler (40) .

6. Process according to any of the preceding claims, **characterized in that** the first component and/or the second component are at least partly introduced from above into a plurality of vertical tubes (44) of the evaporative cooler (40).

7. Process according to any of the preceding claims, **characterized in that** the first component and/or the second component are at least partly introduced directly into the reactor (50).

8. System for producing a polymer from at least one first component and a second component, comprising a reactor (50) and an evaporative cooler (40) for removing heat of reaction arising in the reactor (50), **characterized in that** the evaporative cooler (40) has at least one feed opening (46) for introducing the first component and/or the second component, and **in that**
a return conduit (35) for feeding a solvent from a condensation unit (71) arranged downstream of the reactor (50) into the evaporative cooler (40) is provided, and **in that**
the return conduit (35) is connected to a collection vessel (80) and **in that** the condensation unit (71) is connected to the collection vessel (80) and **in that**
the reactor (50) and the evaporative cooler (40) are arranged in such a way that vapor formed in the reactor (50) ascends against the force of gravity into the evaporative cooler (40) and that vapor condensed in the evaporative cooler (40) flows together with the first component and/or the second component under the force of gravity into the reactor (50) .

9. System according to Claim 8, **characterized in that** the at least one feed opening (46) is arranged in a cap (42) of the evaporative cooler (40).

10. System according to Claim 9, **characterized in that** nozzles (48) are arranged in the cap (42) in such a way that the first component and/or second component introduced through the at least one feed opening (46) are distributed from above into vertical tubes (44) of the evaporative cooler (40).

## Revendications

1. Procédé de fabrication d'un polymère à partir d'au moins un premier composant et un deuxième composant au moyen d'un réacteur (50), la chaleur de réaction produite dans le réacteur (50) étant évacuée par l'intermédiaire d'un refroidisseur à ébullition (40), par le fait que des vapeurs gazeuses produites dans le réacteur (50) sont amenées au refroidisseur à ébullition (40), et des vapeurs condensées sont ramenées du refroidisseur à ébullition (40) dans le réacteur (50), **caractérisé en ce que** le premier composant et/ou le deuxième composant sont amenés au moins partiellement par l'intermédiaire du refroidisseur à ébullition (40) et
passent du refroidisseur à ébullition (40) dans le réacteur (50), et **en ce que**
le premier composant et/ou le deuxième composant sont amenés au moins partiellement sous forme liquide au refroidisseur à ébullition (40), et **en ce que** le premier composant et/ou le deuxième composant sont mélangés au moins partiellement avec un solvant, le solvant étant extrait d'une unité de condensation (71) agencée en aval du réacteur (50) par l'intermédiaire d'un récipient collecteur (80),
les vapeurs gazeuses montant à l'encontre de la force de gravité dans des tubes verticaux (44) du refroidisseur à ébullition (40) et étant condensées dans le refroidisseur à ébullition (40), et
les vapeurs condensées s'écoulant ensuite en retour par la force de gravité dans le réacteur (50) avec le premier composant et/ou le deuxième composant.

2. Procédé selon la revendication 1, **caractérisé en ce que** le premier composant contient du styrène, et **en ce que** le deuxième composant contient de l'acrylonitrile.

3. Procédé selon l'une quelconque des revendications précédentes, **caractérisé en ce que** le deuxième composant contient de l'acrylonitrile, et **en ce que** le premier composant contient de l'alpha-méthylstyrène.

4. Procédé selon l'une quelconque des revendications précédentes, **caractérisé en ce que** le premier composant contient du styrène, et **en ce que** le deuxième composant contient du méthacrylate de méthyle.

5. Procédé selon l'une quelconque des revendications précédentes, **caractérisé en ce que** le premier composant et/ou le deuxième composant sont introduits au moins partiellement par le haut à travers un capot (42) du refroidisseur à ébullition (40).

6. Procédé selon l'une quelconque des revendications précédentes, **caractérisé en ce que** le premier composant et/ou le deuxième composant sont introduits au moins partiellement par le haut dans plusieurs tubes verticaux (44) du refroidisseur à ébullition (40).

7. Procédé selon l'une quelconque des revendications précédentes, **caractérisé en ce que** le premier composant et/ou le deuxième composant sont partiellement introduits directement dans le réacteur (50).

8. Système de fabrication d'un polymère à partir d'au moins un premier composant et un deuxième composant, comprenant un réacteur (50) et un refroidisseur à ébullition (40) pour évacuer la chaleur de réaction produite dans le réacteur (50), **caractérisé en ce que** le refroidisseur à ébullition (40) présente au moins une ouverture d'introduction (46) pour introduire le premier composant et/ou le deuxième composant, et **en ce que** une conduite de retour (35) est prévue pour amener un solvant d'une unité de condensation (71) agencée en aval du réacteur (50) au refroidisseur à ébullition (40), et **en ce que**
la conduite de retour (35) est reliée à un récipient collecteur (80), et **en ce que** l'unité de condensation (71) est reliée au récipient collecteur (80), et **en ce que**
le réacteur (50) et le refroidisseur à ébullition (40) sont agencés de telle sorte que les vapeurs produites dans le réacteur (50) montent dans le refroidisseur à ébullition (40) à l'encontre de la force de gravité, et que les vapeurs condensées dans le refroidisseur à ébullition (40) s'écoulent par la force de gravité dans le réacteur (50) avec le premier composant et/ou le deuxième composant.

9. Système selon la revendication 8, **caractérisé en ce que** l'au moins une ouverture d'introduction (46) est agencée dans un capot (42) du refroidisseur à ébullition (40) .

10. Système selon la revendication 9, **caractérisé en ce que** des buses (48) sont agencées dans le capot (42) de telle sorte que le premier composant et/ou le deuxième composant introduit par l'au moins une ouverture d'introduction (46) sont répartis par le haut dans des tubes verticaux (44) du refroidisseur à ébullition (40).
